# EUROPEAN PATENT SPECIFICATION

(11) **EP 2 455 850 B1**
(45) Date of publication and mention of the grant of the patent: **24.04.2019**
(21) Application number: 11190171.6
(22) Date of filing: 22.11.2011
(51) Int. Cl.: G06F 3/0485, G06F 3/0487, G06F 3/0488

(54) **Method for scrolling screen in touch screen terminal and device thereof**
Verfahren zum Scrollen des Bildschirms auf einem Berührungsbildschirmendgerät und Vorrichtung dafür
Procédé pour faire défiler un écran dans un terminal d'écran tactile et dispositif correspondant

(30) Priority: 22.11.2010 KR 20100116318
(43) Date of publication of application: 23.05.2012
(73) Proprietor: Samsung Electronics Co., Ltd., Suwon-si, Gyeonggi-do, 443-742 (KR)
(72) Inventor: Jo, Dae-Young, Gyeonggi-do (KR); Choi, Jong-Woo, Gyeonggi-do (KR); Heo, Won-Hyung, Gyeonggi-do (KR)
(74) Representative: HGF Limited

(56) References cited:
- JP-A- 2002 323 850
- JP-A- 2005 044 036
- JP-A- 2005 300 944
- US-A1- 2003 098 871
- US-A1- 2007 236 475
- US-A1- 2008 318 635
- US-A1- 2009 237 371
- US-A1- 2010 156 813

## Description

### TECHNICAL FIELD OF THE INVENTION

The present invention relates to a touch screen terminal. More particularly, the present invention relates to a method and apparatus facilitating screen scroll in a touch screen terminal.

### BACKGROUND OF THE INVENTION

Currently, owing to the development of the electronic communication industry, portable terminals such as mobile communication terminals, electronic notes, Personal Digital Assistants (PDAs) and the like are becoming necessities to a modern society while becoming an important means for delivery of fast changing information.

As widely known, recently, a portable terminal applies a touch screen in which an input is induced if a touch occurs on the touch screen. The touch screen is a screen equipped with an input device for, when a touch occurs by hand, receiving an input of its position. The convenience of the touch screen results in users' satisfaction. Further, to keep pace with an information society, various contents (e.g., a web page, an electronic book and the like) are flooding, and terminals capable of reading these contents are in mass production. In these circumstances, users' desires for terminals are growing up, and an overload for satisfying these desires is followed. For one example, in a case where a user is to read a web page from a terminal applying a touch screen (hereinafter, referred to as a 'touch screen terminal'), the user scrolls the screen to view contents not seen on the screen by touch and flicking. But, in some cases, the moment the user touches to scroll the screen, an unintended link web page is opened. Further, in a case where the number of scrolling the screen is large, the user should do a touch and flicking frequently.
US 2007/236475 discloses a touch screen interface including a display screen, a touch sensor device, and a processor coupled to the display screen and the touch sensor. The touch sensor device is adapted to sense object motion in a sensing region that overlaps at least part of the display screen. The processor is adapted to cause a scroll wheel that indicates a scrolling path to appear on the display screen selectively, such as in response to the touch sensor sensing object motion that corresponds to a scrolling initiation gesture. The processor is further adapted to cause scrolling on a display screen selectively, such as in response to the touch sensor sensing subsequent object motion along the scrolling path after the touch sensor has sensed the object motion corresponding to the scrolling initiation gesture.
US 2010/156813 discloses a touch-sensitive display screen having at least two input modes for touch input. In an absolute input mode, positional information is interpreted in an absolute sense: an on-screen object or cursor can be moved, selected or activated by tapping or touching the screen at the location of the object itself or at a desired location for the object. In a relative input mode, touch input provided on the display screen is interpreted in a manner similar to a virtual joystick or a virtual touchpad. In the virtual joystick relative mode, input is interpreted relative to a reference point on the screen. In the virtual touchpad relative mode, input is interpreted according to a direction of motion of a contact point.

### SUMMARY OF THE INVENTION

To address the above-discussed deficiencies of the prior art, it is a primary aspect of the present invention to solve at least the above-mentioned problems and/or disadvantages and to provide at least the advantages described below. Accordingly, an aspect of the present invention is to substantially solve at least the above problems and/or disadvantages and to provide at least the advantages below. Accordingly, one aspect of the present invention is to provide a method and apparatus facilitating screen scroll in a touch screen terminal.

Another aspect of the present disclosure is to provide a method and apparatus for determining the direction of screen scroll and, if a corresponding signal is generated, scrolling a screen in the determined direction in a touch screen terminal.

A further aspect of the present disclosure is to provide a method and apparatus for determining the direction of screen scroll by a touch and move and, if a signal is generated in a proximity sensor, scrolling a screen in the determined direction in a touch screen terminal with the proximity sensor.

The above aspects are achieved by providing a method and apparatus for scrolling a screen in a touch screen terminal.

In accordance with an aspect of the present disclosure, a method for screen scroll in a touch screen terminal including a proximity sensor is provided. The method includes detecting a touch on the touch screen maintained for a threshold time; displaying arrows for guiding at least one or more directions, if the touch is maintained for the threshold time; determining a direction corresponding to the touch and move as a scrolling direction, if the touch is released after the touch and move; receiving an input from the proximity sensor; and performing a screen scroll corresponding to the determined scrolling direction upon receiving the input.

In accordance with another aspect of the present disclosure, an apparatus for screen scroll in a touch screen terminal is provided. The apparatus includes a touch screen; a proximity sensor; a controller configured to: detect a touch on the touch screen maintained for a threshold time, display arrows for guiding at least one or more directions, if the touch is maintained for the threshold time, determine a direction corresponding to the touch and move as a scrolling direction, if the touch is released after the touch and move, receive and input from the proximity sensor, and perform the screen scroll corresponding to the determined scrolling direction upon receiving the input.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a touch screen terminal according to an exemplary embodiment of the present disclosure;
FIG. 2 illustrates a block diagram of a touch screen terminal according to an exemplary embodiment of the present disclosure;
FIG. 3 illustrates a method of screen scroll in a touch screen terminal according to an exemplary embodiment of the present disclosure; and
FIGS. 4A to 4D illustrate processes of screen scroll in a touch screen terminal with a proximity sensor.

### DETAILED DESCRIPTION OF THE INVENTION

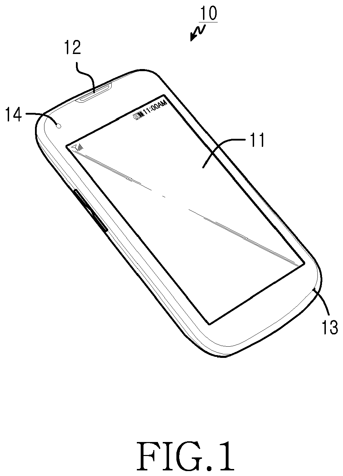

FIGURES 1 through 4D, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged computing device. Preferred embodiments of the present invention will be described herein below with reference to the accompanying drawings. In the following description, well-known functions or constructions are not described in detail since they would obscure the invention in unnecessary detail. And, terms described below, which are defined considering functions in the present invention, can be different depending on user and operator's intention or practice. Therefore, the terms should be defined on the basis of the disclosure throughout this specification.

FIG. 1 illustrates a touch screen terminal according to an exemplary embodiment of the present disclosure.

Referring to FIG. 1, the touch screen terminal 10 can be a Personal Digital Assistant (PDA), a cellular phone and the like. The touch screen terminal 10 includes a touch screen 11 for outputting an image signal and inputting data, a speaker 12 for outputting a voice signal, and a microphone 13 for inputting a voice signal.

The touch screen 11 is composed of a display (e.g., a Liquid Crystal Display (LCD)) having millions of pixels, and a touch panel mounted in the display. The touch screen 11 is widely known in the art and thus, its detailed description is omitted.

Further, the touch screen terminal 10 has a proximity sensor 14. If the proximity sensor 14 senses that an object approaches, the proximity sensor 14 outputs a signal. Generally, the use of the proximity sensor 14 can lead to a decrease of the power consumption of a terminal. For one example, if a user gets the terminal proximal to his/her ear for a call, the proximity sensor 14 outputs a signal according to object approaching and, according to this signal, the touch screen terminal 10 may Off a picture of the touch screen 11.

Particularly, when reading contents such as a web page, an electronic book and the like, the touch screen terminal 10 determines the direction of screen scroll using the touch screen 11. If a signal is output from the proximity sensor 14, the touch screen terminal 10 performs screen scroll in the previously determined direction. This is described below in detail with reference to the drawings.

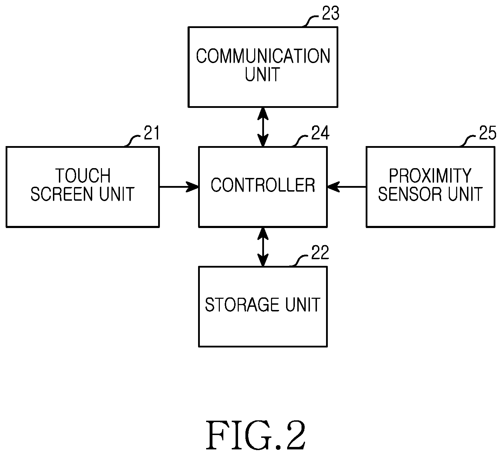

FIG. 2 illustrates a block diagram a touch screen terminal according to an exemplary embodiment of the present disclosure.

Referring to FIG. 2, the touch screen terminal includes a touch screen unit 21 for input/output, a storage unit 22 for data storage, a communication unit 23 for communication, a controller 24 for performing the control of general operation, and a proximity sensor unit 25 for, if an object approaches, outputting a signal.

The touch screen unit 21 outputs an input signal resulting from a touch to the controller 24. According to the control of the controller 24, the touch screen unit 21 receives and displays display data corresponding to the input signal. The storage unit 22 stores a predetermined program controlling a general operation of the touch screen terminal and various data being input/output when a control operation of the touch screen terminal is performed. Under the control of the controller 24, the communication unit 23 performs wired or wireless communication. The controller 24 controls the general operation of the touch screen terminal. A screen scroll method of the controller 24 according to an exemplary embodiment of the present disclosure is described below in detail with reference to the drawings.

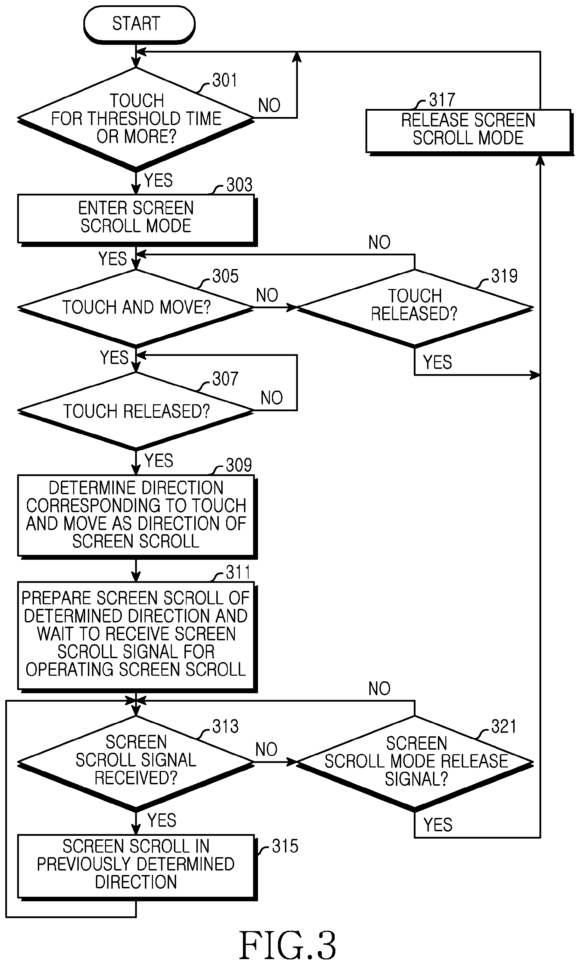

FIG. 3 illustrates a method of screen scroll in a touch screen terminal according to an exemplary embodiment of the present disclosure. A description of FIG. 3 is made assuming that the touch screen terminal is reading contents such as a web page, an electronic book and the like.

Referring to FIG. 3, in step 301, the controller 24 identifies if a touch occurs for a threshold time or more on the touch screen unit 21.

If the touch occurs for the threshold time or more, the controller 24 proceeds to step 303 and enters a screen scroll mode.

After that, in step 305, the controller 24 identifies a touch and move. If the controller identifies a state where the touch and move is not identified and only the touch is done for the threshold time or more, the controller 24 proceeds to step 319 and identifies a touch release. If the touch release is identified in step 319, the controller 24 proceeds to step 317 and releases (i.e., terminates) the screen scroll mode.

If the touch and move is identified in step 305, in step 307, the controller 24 identifies if the touch is released. If the touch is released after the touch and move, the controller 24 proceeds to step 309 and determines a direction corresponding to the touch and move, as the direction of screen scroll. Next, the controller 24 proceeds to step 311 and prepares screen scroll of the previously determined direction, waiting to receive a screen scroll signal for operating the screen scroll.

If the controller identifies in step 313 that a screen scroll signal is received, the controller 24 proceeds to step 315 and performs the screen scroll of the previously determined direction. The screen scroll signal may be generated from a separate key button provided in the touch screen terminal. Further, the screen scroll signal may be induced from the proximity sensor unit 25. For one example, the proximity sensor unit 25 senses that an object approaches, and outputs a signal for this to the controller 24. If receiving the signal from the proximity sensor unit 25, the controller 24 performs screen scroll. Further, if the screen scroll signal is continuous, the controller 24 may perform continuous screen scroll in the previously determined direction.

Also, in step 321, the controller 24 identifies if a screen scroll mode release signal is generated in the course of waiting to receive a screen scroll signal. If the controller identifies in step 321 that the screen scroll mode release signal is generated, the controller 24 proceeds to step 317 and releases (i.e., terminates) the screen scroll mode. The screen scroll mode release signal can be generated if an unspecific region of a touch screen is touched.

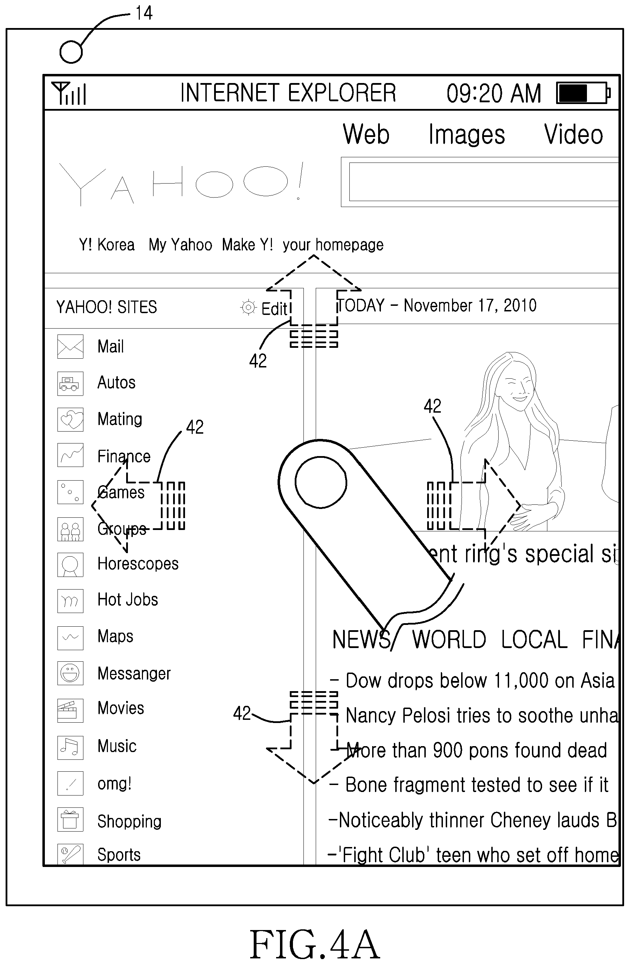

FIGS. 4A to 4D illustrate processes of screen scroll in a touch screen terminal with a proximity sensor. As illustrated in FIGS. 4A to 4C, the touch screen terminal is outputting contents such as a web page, an electronic book and the like.

In FIG. 4A, a screen scroll mode is executed if a user touches an unspecific touch region of a touch screen for a threshold time or more. The screen scroll mode displays arrows 42 for guiding up/down/left/right directions in which a screen is scrolled.

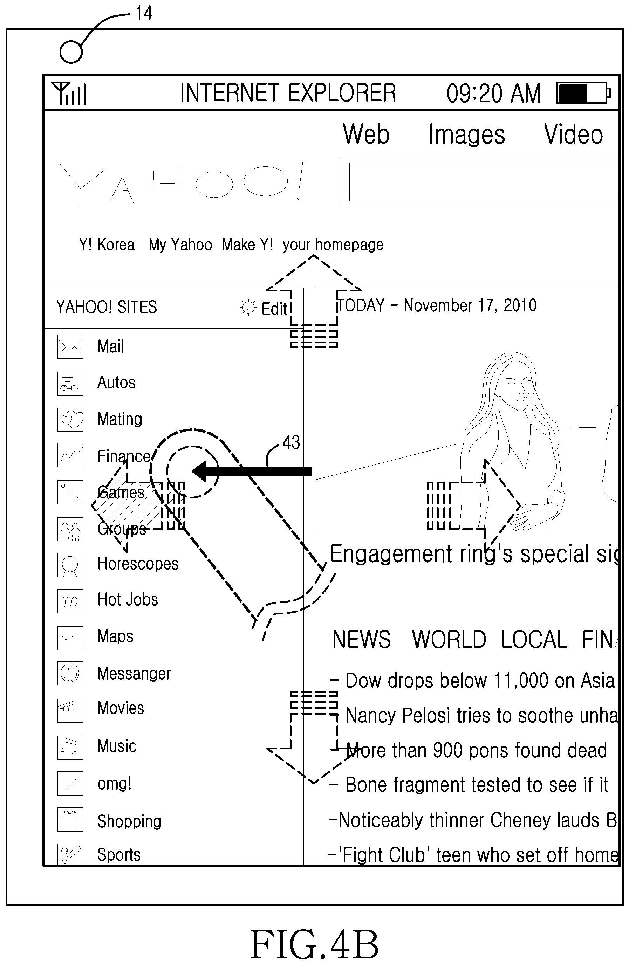

In FIG. 4B, after touching for the threshold time or more, if the user touches and moves in a left direction and releases the touch (43), the screen scroll mode determines the direction of screen scroll as the left, prepares screen scroll of the left direction, and waits to receive a signal for operating the screen scroll of the left direction. If the user touches and moves in a corresponding direction, the screen scroll mode expresses an arrow of the corresponding direction as noticeable to let the user know the direction of screen scroll to be implemented in future. As illustrated, the screen scroll can be performed in four directions of up/down/left/right but, without being limited to this, can be performed in various directions. For one example, the direction of screen scroll can be a direction from a touch starting point to a touch ending point. If the touch is released without a touch and move, the arrows disappear and the screen scroll mode is released.

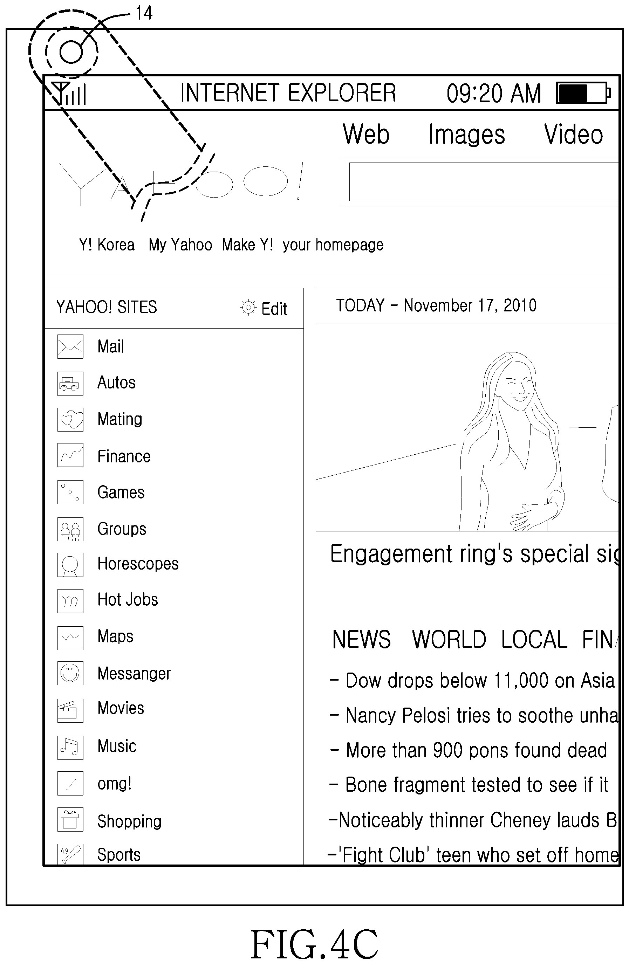

In FIG. 4C, the user generates a screen scroll signal for operating the prepared screen scroll of the left direction. The screen scroll signal can be output from a proximity sensor 14 of a terminal. For one example, if the user gets a finger proximal to the proximity sensor 14, the proximity sensor 14 senses that an object approaches, and outputs the screen scroll signal. As aforementioned, if the screen scroll signal is output continuously, continuous screen scroll is performed in a corresponding direction. For one example, if the user gets a finger proximal to the proximal sensor 14 for a threshold time or more, continuous screen scroll is performed in a corresponding direction. Further, the screen scroll mode may construct a separate touch button for the screen scroll start signal in a touch area.

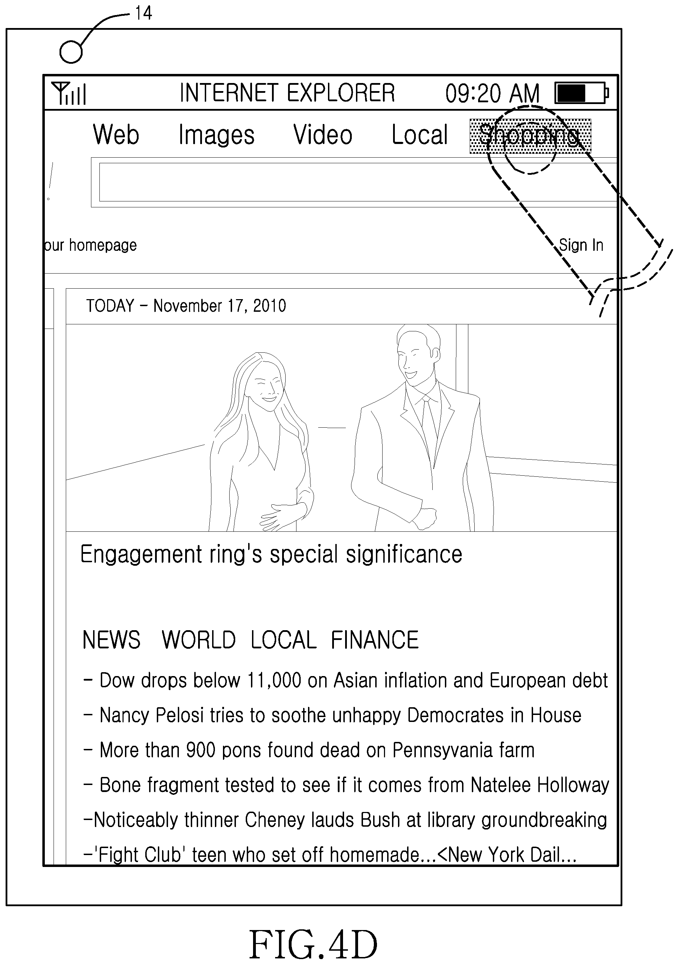

In FIG. 4D, if an unspecific area is touched, the screen scroll mode is released and, according to cases, a corresponding link page can be immediately opened. For one example, if a user touches a touch area where a 'Shopping' link is displayed in course of the screen scroll mode, the screen scroll mode is released and the display converts into a 'Shopping' link page.

A method and apparatus for screen scroll in a touch screen terminal according to the present disclosure can prevent an unintended operation caused by an erroneous touch at screen scrolling.

While the invention has been shown and described with reference to certain preferred embodiments thereof, it will be understood by those skilled in the art that various changes in form and details may be made therein without departing from the scope of the invention as defined by the appended claims.

## Claims

1. A method for screen scroll in a touch screen terminal [10] including a touch screen [21] and a proximity sensor [25], the method comprising:
detecting [301] a touch on the touch screen [21] maintained for a threshold time;
displaying arrows [42] for guiding at least one or more directions, if the touch is maintained for the threshold time;
determining [309] a direction corresponding to the touch and move as a scrolling direction, if the touch is released after the touch and move;
receiving [313] an input from the proximity sensor [25]; and
performing [315] a screen scroll corresponding to the determined scrolling direction upon receiving the input.

2. The method of claim 1, further comprises:
starting a screen scroll mode in response to detecting [301] a touch in an unspecific touch region for at least a threshold time.

3. The method of claim 1, wherein determining [309] the direction corresponding to the touch and move as the scrolling direction further comprises:
determining [309] a direction from a touch starting point to a touch ending point as the scrolling direction.

4. The method of claim 1, wherein determining [309] the direction corresponding to the touch and move as the scrolling direction further comprises:
selecting one arrow by the touch and move, and determining [309] a direction corresponding to the selected arrow as the scrolling direction.

5. The method of claim 1 further comprising:
responsive to continuously receiving the input, continuously performing [315] the screen scroll in the determined direction.

6. An apparatus for screen scroll in a touch screen terminal [10], the apparatus comprising:
a touch screen [21];
a proximity sensor [25]; and
a controller [24] configured to:
detect a touch on the touch screen [21] maintained for a threshold time,
display arrows for guiding at least one or more directions, if the touch is maintained for the threshold time,
determine a direction corresponding to the touch and move as a scrolling direction, if the touch is released after the touch and move,
receive an input from the proximity sensor [25], and
perform the screen scroll corresponding to the determined scrolling direction upon receiving the input.

7. The apparatus of claim 6, wherein the controller is further configured to enter a screen scroll mode in response to detecting an unspecific touch region being touched for at least a threshold time.

8. The apparatus of claim 6, wherein the controller is further configured to determine a direction from a touch starting point to a touch ending point as the scrolling direction.

9. The apparatus of claim 6, wherein the controller is further configured to determine, responsive to one arrow being selected by the touch and move, a direction corresponding to the selected arrow as the scrolling direction.

10. The apparatus of claim 6, wherein, responsive to the input being continuously received, the controller is further configured to continuously perform the screen scroll in the previously determined direction.

11. The apparatus of claim 6, wherein the proximity sensor [25] is configured to identify the input based on an object approaching to the controller.

## Patentansprüche

1. Verfahren zum Rollen eines Bildschirms auf einem Berührungsbildschirmendgerät [10], enthaltend einen Berührungsbildschirm [21] und einen Nähesensor [25], wobei das Verfahren umfasst:
Detektieren [301] eines Berührens auf dem Berührungsbildschirm [21], das für eine Schwellwertzeit gehalten wird;
Anzeigen von Pfeilen [42] zum Führen mindestens einer oder mehrerer Richtungen, wenn das Berühren für die Schwellwertzeit gehalten wird;
Bestimmen [309] einer Richtung entsprechend dem Berühren und Bewegen als Rollrichtung, wenn das Berühren nach dem Berühren losgelassen und bewegt wird;
Empfangen [313] eines Eingangs vom Nähesensor [25];
und Durchführen [315] eines Bildschirmrollens entsprechend der bestimmten Rollrichtung nach Empfangen des Eingangs.

2. Verfahren nach Anspruch 1, ferner umfassend:
Starten eines Bildschirmrollmodus in Reaktion auf das Detektieren [301] eines Berührens in einer unspezifischen Berührungsregion für mindestens eine Schwellwertzeit.

3. Verfahren nach Anspruch 1, wobei das Bestimmen [309] der Richtung entsprechend dem Berühren und Bewegen als Rollrichtung ferner umfasst:
Bestimmen [309] einer Richtung von einem Berührungsanfangspunkt zu einem Berührungsendpunkt als Rollrichtung.

4. Verfahren nach Anspruch 1, wobei das Bestimmen [309] der Richtung entsprechend dem Berühren und Bewegen als Rollrichtung ferner umfasst:
Auswählen eines Pfeils durch das Berühren und Bewegen und Bestimmen [309] einer Richtung entsprechend dem ausgewählten Pfeil als Rollrichtung.

5. Verfahren nach Anspruch 1, ferner umfassend:
in Reaktion auf das kontinuierliche Empfangen des Eingangs, kontinuierliches Durchführen [315] des Bildschirmrollens in der bestimmten Richtung.

6. Vorrichtung zum Rollen eines Bildschirms auf einem Berührungsbildschirmendgerät [10], wobei die Vorrichtung umfasst:
einen Berührungsbildschirm [21]; einen Nähesensor [25]; und eine Steuerung [24], die konfiguriert ist, um:
ein Berühren auf dem Berührungsbildschirm [21], das für eine Schwellwertzeit gehalten wird, zu detektieren, Pfeile zum Führen mindestens einer oder mehrerer Richtungen anzuzeigen, wenn das Berühren für die Schwellwertzeit gehalten wird, Bestimmen einer dem Berühren und Bewegen entsprechenden Richtung als Rollrichtung, wenn das Berühren nach dem Berühren losgelassen und bewegt wird, Empfangen eines Eingangs vom Nähesensor [25] und Durchführen des Bildschirmrollens entsprechend der bestimmten Rollrichtung nach Empfangen des Eingangs.

7. Vorrichtung nach Anspruch 6, wobei die Steuerung ferner konfiguriert ist, um in Reaktion auf das Detektieren eines Berührens einer unspezifischen Berührungsregion für mindestens eine Schwellwertzeit in einen Bildschirmrollmodus einzutreten.

8. Vorrichtung nach Anspruch 6, wobei die Steuerung ferner konfiguriert ist, um eine Richtung von einem Berührungsanfangspunkt zu einem Berührungsendpunkt als Rollrichtung zu bestimmen.

9. Vorrichtung nach Anspruch 6, wobei die Steuerung ferner konfiguriert ist, um in Reaktion auf das Auswählen eines Pfeils durch das Berühren und Bewegen, eine dem ausgewählten Pfeil entsprechende Richtung als Rollrichtung zu bestimmen.

10. Vorrichtung nach Anspruch 6, wobei die Steuerung ferner konfiguriert ist, um in Reaktion auf das kontinuierliche Empfangen des Eingangs, das Bildschirmrollen in der zuvor bestimmten Richtung kontinuierlich auszuführen.

11. Vorrichtung nach Anspruch 6, wobei der Nähesensor [25] konfiguriert ist, um den Eingang basierend auf ein sich der Steuerung näherndes Objekt zu identifizieren.

## Revendications

1. Procédé de défilement d'écran dans un terminal d'écran tactile (10) comprenant un écran tactile (21) et un capteur de proximité (25), ledit procédé comprenant :
la détection (301) d'un toucher sur l'écran tactile (21) maintenu pendant une durée limite ;
l'affichage de flèches (42) permettant d'indiquer au moins une ou plusieurs directions, si le toucher est maintenu pendant la durée limite ;
la détermination (309) d'une direction correspondant au toucher et déplacement en tant que direction de défilement, si le toucher est relâché après le toucher et déplacement ;
la réception (313) d'une entrée provenant du capteur de proximité (25) ;
et la réalisation (315) d'un défilement d'écran correspondant à la direction de défilement déterminée lors de la réception de l'entrée.

2. Procédé selon la revendication 1, comprenant en outre :
le début d'un mode de défilement d'écran en réponse à la détection (301) d'un toucher dans une zone tactile non spécifique pendant au moins une durée limite.

3. Procédé selon la revendication 1, ladite détermination (309) de la direction correspondant au toucher et déplacement en tant que direction de défilement comprenant en outre :
la détermination (309) d'une direction allant d'un point de début de toucher à un point de fin de toucher en tant que direction de défilement.

4. Procédé selon la revendication 1, ladite détermination (309) de la direction correspondant au toucher et déplacement en tant que direction de défilement comprenant en outre :
le choix d'une flèche par le toucher et déplacement, et la détermination (309) d'une direction correspondant à la flèche choisie en tant que direction de défilement.

5. Procédé selon la revendication 1, comprenant en outre :
en réponse à la réception de manière continue de l'entrée, la réalisation de manière continue (315) du défilement d'écran selon la direction déterminée.

6. Appareil permettant le défilement d'écran dans un terminal d'écran tactile (10), ledit appareil comprenant :
un écran tactile (21) ; un capteur de proximité (25) ; et un dispositif de commande (24) conçu pour :
détecter un toucher sur l'écran tactile (21) maintenu pendant un temps limite, afficher des flèches permettant d'indiquer au moins une ou plusieurs directions, si le toucher est maintenu pendant le temps limite, déterminer une direction correspondant au toucher et déplacement en tant que direction de défilement, si le toucher est relâché après le toucher et déplacement, recevoir une entrée provenant du capteur de proximité (25) et réaliser le défilement d'écran correspondant à la direction de défilement déterminée lors de la réception de l'entrée.

7. Appareil selon la revendication 6, ledit dispositif de commande étant en outre conçu pour entrer dans un mode de défilement d'écran en réponse à la détection d'une zone tactile non spécifique touchée pendant au moins une durée limite.

8. Appareil selon la revendication 6, ledit dispositif de commande étant en outre conçu pour déterminer une direction allant d'un point de début de toucher à un point de fin de toucher en tant que direction de défilement.

9. Appareil selon la revendication 6, ledit dispositif de commande étant en outre conçu pour déterminer, en réponse au choix d'une flèche par le toucher et déplacement, une direction correspondant à la flèche choisie en tant que direction de défilement.

10. Appareil selon la revendication 6, en réponse à l'entrée reçue de manière continue, ledit dispositif de commande étant en outre conçu pour réaliser de manière continue le défilement d'écran dans la direction précédemment déterminée.

11. Appareil selon la revendication 6, ledit capteur de proximité (25) étant conçu pour identifier l'entrée sur la base d'un objet approchant le dispositif de commande.
